# EUROPEAN PATENT APPLICATION

(11) **EP 4 621 204 A1**
(43) Date of publication of application: **24.09.2025**
(21) Application number: 25155218.8
(22) Date of filing: 31.01.2025
(51) Int. Cl.: F02C 7/32

(54) **POWER AND THERMAL MANAGEMENT SYSTEM AIR CYCLE MACHINE ELECTRIC POWER BOOST TO REDUCE HIGH PRESSURE COMPRESSOR BLEED FLOW**

(30) Priority: 22.03.2024 US 202418613210
(71) Applicant: RTX Corporation, Farmington, CT 06032 (US)
(72) Inventor: Giel, David, Jupiter, 33458 (US); Cue, Javier A., Palm Beach Gardens, 33418 (US)
(74) Representative: Schmitt-Nilson Schraud Waibel Wohlfrom Patentanwälte Partnerschaft mbB

(57) **Abstract**

An integrated motor/generator system including a main shaft supporting an ACM compressor and an ACM turbine; an ACM first heat exchanger fluidly coupled between the ACM compressor and the ACM turbine; an ACM second heat exchanger fluidly coupled between the ACM turbine and the ACM compressor; an ACM working fluid fluidly coupled with the ACM compressor, the ACM first heat exchanger, the ACM turbine and the ACM second heat exchanger; an APU turbine in operative communication with the main shaft; an electrical power source in operative communication with the integrated motor/generator; and the integrated motor/generator in operative communication with the main shaft, wherein the integrated motor/generator is configured to at least one of produce mechanical rotary shaft energy into the main shaft, responsive to a predetermined gas turbine engine condition and generate electrical power responsive to another predetermined gas turbine engine condition.

## Description

The present disclosure is directed to employing the integrated motor/generator to provide transient boost to cooling electronics during high cooling demand events.

An aircraft Air Cycle Machine (ACM) combines the function of an auxiliary power unit (APU) and a closed loop air cycle creating cooling availability from hotter sinks of fan duct bypass air than required electric cooling limits.

Aircraft are evolving to require dramatically increasing heat loads of mission critical electronic components. These increasing heat loads can result in greatly increased cooling demands.

The current gas turbine engine Power and Thermal Management System (PTMS) is operating above the original intended design point. Operating above the design point forces the gas turbine engine to increase customer bleed demand from the high pressure compressor (HPC). The increased bleed flow reduces gas turbine engine thrust-specific fuel consumption (TSFC) dramatically, providing an overall air vehicle platform penalty.

In accordance with the present disclosure, there is provided an integrated motor/generator system comprising a main shaft supporting an ACM compressor; the main shaft supporting an ACM turbine; an ACM first heat exchanger fluidly coupled between the ACM compressor and the ACM turbine, wherein the ACM first heat exchanger is downstream of the ACM compressor and upstream of the ACM turbine; an ACM second heat exchanger fluidly coupled between the ACM turbine and the ACM compressor, wherein the ACM second heat exchanger is downstream of the ACM turbine and upstream of the ACM compressor; an ACM working fluid fluidly coupled with the ACM compressor, the ACM first heat exchanger, the ACM turbine and the ACM second heat exchanger; an APU turbine in operative communication with the main shaft; an electrical power source in operative communication with the integrated motor/generator; and the integrated motor/generator in operative communication with the main shaft, wherein the integrated motor/generator is configured to at least one of produce mechanical rotary shaft energy into the main shaft, responsive to a predetermined gas turbine engine condition and generate electrical power responsive to another predetermined gas turbine engine condition.

Particular embodiments further may include at least one, or a plurality of, the following optional features, alone or in combination with each other:

A further embodiment of any of the foregoing embodiments may additionally and/or alternatively include the integrated motor/generator is in operative communication with a controller.

A further embodiment of any of the foregoing embodiments may additionally and/or alternatively include the integrated motor/generator system further comprising a high pressure engine bleed fluidly coupled to the APU turbine.

A further embodiment of any of the foregoing embodiments may additionally and/or alternatively include the integrated motor/generator system further comprising an avionics heat exchanger fluidly coupled to the ACM second heat exchanger.

A further embodiment of any of the foregoing embodiments may additionally and/or alternatively include the predetermined gas turbine engine condition comprises an operating state demanding the high pressure engine bleed air.

A further embodiment of any of the foregoing embodiments may additionally and/or alternatively include the predetermined gas turbine engine condition comprises an operating state demanding the electrical power.

A further embodiment of any of the foregoing embodiments may additionally and/or alternatively include the ACM first heat exchanger is located in a fan duct.

In accordance with the present disclosure, there is provided an integrated motor/generator system for a gas turbine engine comprising a main shaft supporting an ACM compressor; the main shaft supporting an ACM turbine; an ACM first heat exchanger located in a fan duct of the gas turbine engine, the ACM first heat exchanger fluidly coupled between the ACM compressor and the ACM turbine, wherein the ACM first heat exchanger is downstream of the ACM compressor and upstream of the ACM turbine; an ACM second heat exchanger fluidly coupled between the ACM turbine and the ACM compressor, wherein the ACM second heat exchanger is downstream of the ACM turbine and upstream of the ACM compressor; an ACM working fluid fluidly coupled with the ACM compressor, the ACM first heat exchanger, the ACM turbine and the ACM second heat exchanger; an APU turbine in operative communication with the main shaft; an electrical power source in operative communication with the integrated motor/generator; and the integrated motor/generator in operative communication with the main shaft, wherein the motor/generator is configured to at least one of produce mechanical rotary shaft energy for the main shaft, responsive to a predetermined gas turbine engine condition and generate electrical power responsive to another predetermined gas turbine engine condition.

Particular embodiments further may include at least one, or a plurality of, the following optional features, alone or in combination with each other:

A further embodiment of any of the foregoing embodiments may additionally and/or alternatively include the integrated motor/generator system for a gas turbine engine further comprising a controller in operative communication with the integrated motor/generator.

A further embodiment of any of the foregoing embodiments may additionally and/or alternatively include the integrated motor/generator system for a gas turbine engine further comprising a high pressure engine bleed fluidly coupled to the APU turbine.

A further embodiment of any of the foregoing embodiments may additionally and/or alternatively include the integrated motor/generator system for a gas turbine engine further comprising an avionics heat exchanger fluidly coupled to the ACM second heat exchanger.

A further embodiment of any of the foregoing embodiments may additionally and/or alternatively include the predetermined gas turbine engine condition comprises an operating state demanding the electrical power.

A further embodiment of any of the foregoing embodiments may additionally and/or alternatively include the predetermined gas turbine engine condition comprises an operating state demanding the high pressure engine bleed air.

In accordance with the present disclosure, there is provided a process for an integrated motor/generator system for a gas turbine engine comprising coupling an ACM compressor with a main shaft; coupling an ACM turbine with the main shaft; fluidly coupling an ACM first heat exchanger between the ACM compressor and the ACM turbine, wherein the ACM first heat exchanger is downstream of the ACM compressor and upstream of the ACM turbine; fluidly coupling an ACM second heat exchanger between the ACM turbine and the ACM compressor, wherein the ACM second heat exchanger is downstream of the ACM turbine and upstream of the ACM compressor; fluidly coupling an ACM working fluid with the ACM compressor, the ACM first heat exchanger, the ACM turbine and the ACM second heat exchanger; coupling an APU turbine in operative communication with the main shaft; coupling an electrical power source in operative communication with the integrated motor/generator; coupling the integrated motor/generator in operative communication with the main shaft; and configuring the integrated motor/generator to at least one of produce mechanical rotary shaft energy into the main shaft, responsive to a predetermined gas turbine engine condition and generate electrical power responsive to another predetermined gas turbine engine condition.

Particular embodiments further may include at least one, or a plurality of, the following optional features, alone or in combination with each other:

A further embodiment of any of the foregoing embodiments may additionally and/or alternatively include the process further comprising coupling the integrated motor/generator in operative communication with a controller.

A further embodiment of any of the foregoing embodiments may additionally and/or alternatively include the process further comprising fluidly coupling a high pressure engine bleed to the APU turbine.

A further embodiment of any of the foregoing embodiments may additionally and/or alternatively include the process further comprising fluidly coupling an avionics heat exchanger to the ACM second heat exchanger.

A further embodiment of any of the foregoing embodiments may additionally and/or alternatively include the process further comprising configuring the predetermined gas turbine engine condition comprising an operating state demanding the high pressure engine bleed air.

A further embodiment of any of the foregoing embodiments may additionally and/or alternatively include the process further comprising configuring the predetermined gas turbine engine condition comprising an operating state demanding the electrical power.

A further embodiment of any of the foregoing embodiments may additionally and/or alternatively include the process further comprising locating the ACM first heat exchanger in a fan duct.

This invention was made with Government support under Contract N00019-21-G-0005 DO N00019-23-F-0019 awarded by the United States Navy Contract. The Government has certain rights in this invention.

Other details of the integrated motor/generator are set forth in the following detailed description and the accompanying drawings wherein like reference numerals depict like elements.

Fig. 1 is a cross section view of an exemplary gas turbine engine.

Fig. 2 is a schematic representation of an exemplary power and thermal management system for the gas turbine engine.

Fig. 3 is a schematic representation of an exemplary air refrigeration cycle.

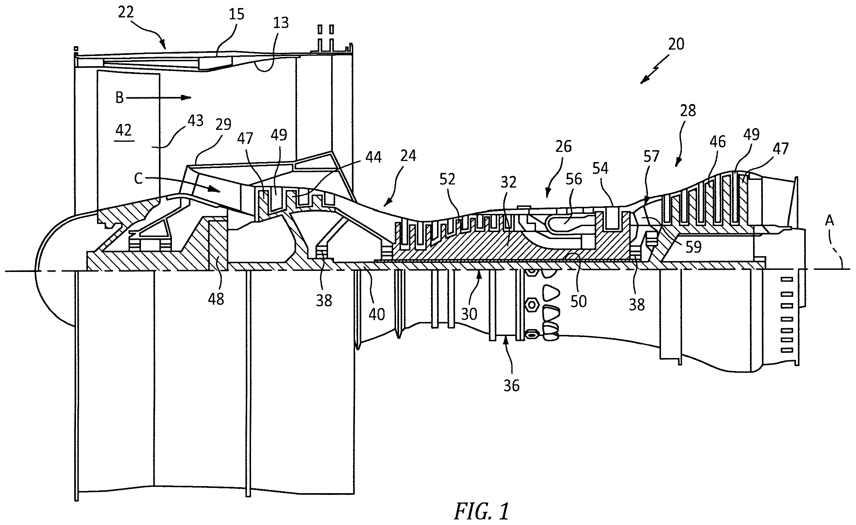

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of static vanes adjacent the rotatable airfoils. The rotatable airfoils and vanes are schematically indicated at 47 and 49.

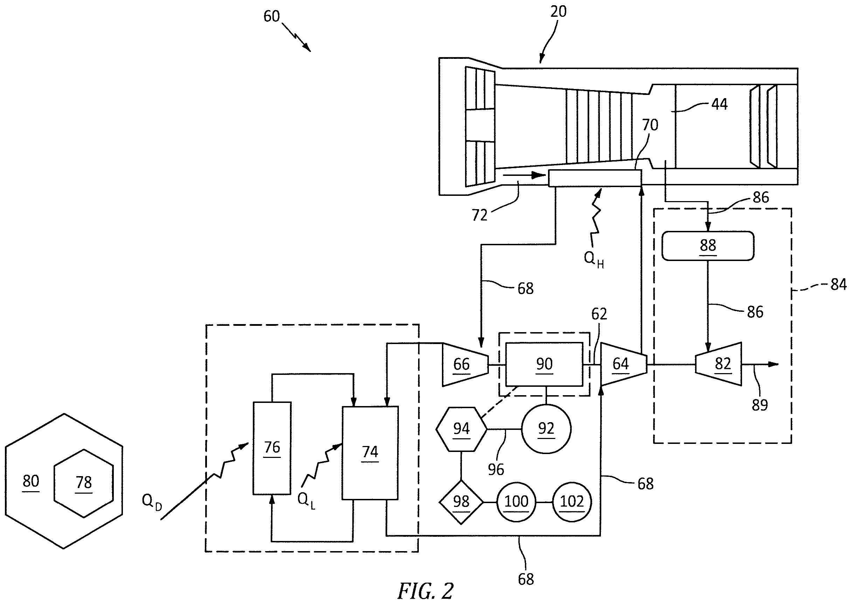

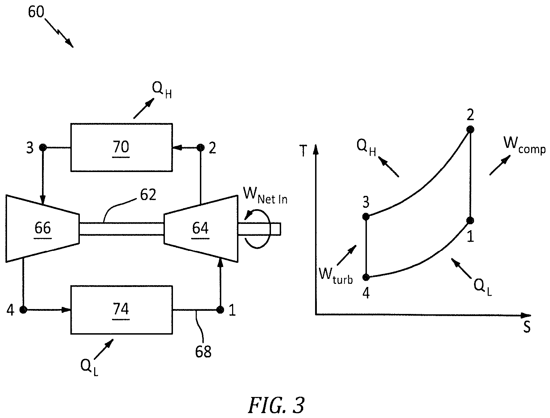

Referring also to Fig. 2 and Fig. 3 the exemplary air cycle machine (ACM) 60 for the gas turbine engine 20 is shown. The air cycle machine 60 includes a main shaft 62 that supports an ACM compressor 64. The main shaft 62 also supports an ACM turbine 66.

As seen in Fig. 3, an ACM working fluid 68 circulates through the ACM compressor 64 from state 1 to state 2, where the compressor adds work energy into the ACM working fluid 68 as the ACM working fluid 68 is compressed. From state 2 to state 3, the ACM working fluid 68, now at a higher pressure and temperature, flows through an ACM first heat exchanger 70 where the ACM working fluid 68 is cooled, and transfers thermal energy Q_{H}. In the exemplary embodiment at Fig 3, the ACM first heat exchanger 70 can be located in the fan duct 72. The ACM first heat exchanger 70 can discharge the thermal energy Q_{H} to the air flowing through the fan duct 72. In an exemplary embodiment, the air flowing through the fan duct 72 can be about 400 degrees Fahrenheit. The flow rate of the ACM working fluid 68 can be proportional to the cooling rate of the thermal energy Q_{H}.

From state 3 to state 4 the ACM working fluid 68 can expand through the ACM turbine 66. The ACM working fluid 68 can rotate the ACM turbine 66 creating shaft work along the main shaft 62. The ACM working fluid 68 is now at a lower pressure and temperature.

From state 4 to state 1 the ACM working fluid 68 flows through a second ACM heat exchanger 74. The ACM working fluid 68 is heated by receiving thermal energy Q_{L}. As seen in Fig. 2, the thermal energy Q_{L} can be transferred from an avionics heat exchanger 76. The avionics heat exchanger 76 can receive thermal energy Q_{D} generated from electronic equipment 78 during operation of the aircraft 80. The electronic equipment 78 can include critical aircraft 80 electronics. In an exemplary embodiment, the electronic equipment 78 can require cooling to temperatures below 145 degrees Fahrenheit. The cycle of the ACM working fluid 68 continues from state 1 through state 4 as shown.

The main shaft 62 is also coupled to an APU turbine 82. The APU turbine 82 can be part of an Auxiliary Power Unit (APU) 84. The APU turbine 82 can receive a high pressure engine bleed 86 flowing through an APU combustor 88. The high pressure engine bleed 86 is taken from the high pressure compressor 44. The APU combustor 88 adds energy into the high pressure engine bleed 86 for expansion through the APU turbine 82 which creates the shaft work into the main shaft 62. The high pressure bleed 86 can be discharged overboard through APU turbine exhaust 89. It is possible to achieve more APU turbine 82 shaft work extraction by increasing the high pressure engine bleed air 86 flow rate at the available pressure. However, increasing the high pressure engine bleed air 86 flow rate at the available pressure reduces the available energy to create engine thrust which is considered to be a propulsion debit.

A motor/generator 90 can be in operative communication with the main shaft 62, such as, coupled to the main shaft 62, as seen in Fig. 2. The motor/generator 90 can be in operative communication with an electrical power source 92. The electrical power source can be generated from the main gas turbine shaft low speed spool 30 connected to main generator (not shown). The motor/generator 90 can be activated to produce mechanical rotary shaft energy. The motor/generator 90 can rotate the main shaft 62. The electrical power source 92 can supply the motor/generator electrical power. The electrical power from the electrical power source 92 drives the motor/generator 90 and produces mechanical shaft power.

In another operating state, the motor/generator 90 can operate to generate electricity that can be supplied to the electrical power source 92. The rotary shaft power from the main shaft 62 driven by the ACM turbine 66 and/or APU turbine 82 can be utilized to drive the motor/generator 90 and generate electricity.

The motor/generator 90 can be operated to drive the main shaft 62 by utilizing electrical energy. The motor/generator 90 can be operated as a substitute for the energy utilized by the high pressure engine bleed 86 for driving the closed loop cooling flow of ACM working fluid 68. During predetermined gas turbine engine 20 operating conditions, when there is a need to reduce the high pressure engine bleed air 86, the motor/generator 90 can be energized from the electrical power source 92 and input mechanical shaft energy to the main shaft 62. The high pressure engine bleed air 86 demand can be reduced, making available more energy for engine thrust. By integrating the motor/generator 90 to supplement the engine bleed air 86 with electrical energy the cooling capacity of the air cycle machine 60 can be increased while also making available more engine thrust. In certain predetermined operating states, the gas turbine engine thrust-specific fuel consumption (TSFC) can be improved with reduction in the high pressure engine bleed air 86.

The motor/generator 90 can be dynamically controlled by a controller 94 during the various gas turbine engine 20 and aircraft 80 operating conditions. The controller 94 can employ the motor/generator 90 at different times during operations to either produce the mechanical shaft energy to the main shaft 62 or to utilize the main shaft 62 rotary power to generate electricity. In certain predetermined gas turbine engine conditions, such as a high demand for electrical energy on the aircraft 80, the motor/generator 90 can be employed to generate electricity by employing shaft work from the main shaft 62.

The controller 94 may include hardware, firmware, and/or software components that are configured to perform the functions disclosed herein, including the functions of the motor/generator 90. While not specifically shown, the controller 94 may include other computing devices (e.g., servers, mobile computing devices, etc.) which may be in communication with each other and/or the controller 94 via a communication network 96 to perform one or more of the disclosed functions. The controller may include at least one processor 98 (e.g., a controller, microprocessor, microcontroller, digital signal processor, etc.), memory 100, and an input/output (I/O) subsystem 102. The controller 94 may be embodied as any type of computing device e.g., a server, an enterprise computer system, a network of computers, a combination of computers and other electronic devices, or other electronic devices. Although not specifically shown, the I/O subsystem 102 typically includes, for example, an I/O controller, a memory controller, and one or more I/O ports. The processor 98 and the I/O subsystem 102 are communicatively coupled to the memory 100. The memory 100 may be embodied as any type of computer memory device (e.g., volatile memory such as various forms of random access memory).

In an exemplary embodiment, the motor/generator 90 can be sized to meet various predetermined demands. For example, motor/stator windings on the motor/generator 90 can be tailored to provide greater or lesser capacity. As the critical demands of the aircraft 80 and gas turbine engine 20 are increased, the motor/generator 90 can be adapted to meet those increased demands. It is also contemplated that control logic adaptations can be performed to enhance the motor/generator functions absent significant hardware changes.

A technical advantage of the disclosed integrated motor/generator can include reducing the propulsion debit by employing electrical energy to drive the motor/generator to add mechanical shaft energy to drive the closed loop cooling flow.

Another technical advantage of the disclosed integrated motor/generator can include tapping the electrical input capacity of the motor/generator to provide a transient boost to cooling during high cooling demand events.

Another technical advantage of the disclosed integrated motor/generator can include providing the transient boost to cooling during high cooling demand events without causing engine propulsion debt from excessive HPC bleed demand.

Another technical advantage of the disclosed integrated motor/generator can include the capacity to scale the motor/generator to accommodate additional work loads during predetermined engine operating conditions.

Another technical advantage of the disclosed integrated motor/generator can include integrating the APU with the PTMS air cycle for cooling.

There has been provided an integrated motor/generator. While the integrated motor/generator has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An integrated motor/generator system comprising:
a main shaft supporting an ACM compressor;
the main shaft supporting an ACM turbine;
an ACM first heat exchanger fluidly coupled between the ACM compressor and the ACM turbine, wherein the ACM first heat exchanger is downstream of the ACM compressor and upstream of the ACM turbine;
an ACM second heat exchanger fluidly coupled between the ACM turbine and the ACM compressor, wherein the ACM second heat exchanger is downstream of the ACM turbine and upstream of the ACM compressor;
an ACM working fluid fluidly coupled with the ACM compressor, the ACM first heat exchanger, the ACM turbine and the ACM second heat exchanger;
an APU turbine in operative communication with the main shaft;
an electrical power source in operative communication with the integrated motor/generator; and
the integrated motor/generator in operative communication with the main shaft, wherein the integrated motor/generator is configured to at least one of produce mechanical rotary shaft energy into the main shaft, responsive to a predetermined gas turbine engine condition and generate electrical power responsive to another predetermined gas turbine engine condition.

2. The integrated motor/generator system according to claim 1, wherein the integrated motor/generator is in operative communication with a controller.

3. The integrated motor/generator system according to claim 1 or 2, further comprising:
a high pressure engine bleed fluidly coupled to the APU turbine.

4. The integrated motor/generator system according to any of claims 1 to 3, further comprising:
an avionics heat exchanger fluidly coupled to the ACM second heat exchanger.

5. The integrated motor/generator system according to any of claims 1 to 4, wherein the predetermined gas turbine engine condition comprises an operating state demanding the high pressure engine bleed air.

6. The integrated motor/generator system according to any of claims 1 to 5, wherein the predetermined gas turbine engine condition comprises an operating state demanding the electrical power.

7. The integrated motor/generator system according to any of claims 1 to 6, wherein the ACM first heat exchanger is located in a fan duct.

8. An integrated motor/generator system for a gas turbine engine, wherein the ACM first heat exchanger is located in a fan duct of the gas turbine engine.

9. The integrated motor/generator system for a gas turbine engine according to claim 8, further comprising:
a controller in operative communication with the integrated motor/generator.

10. A process for an integrated motor/generator system for a gas turbine engine comprising:
coupling an ACM compressor with a main shaft;
coupling an ACM turbine with the main shaft;
fluidly coupling an ACM first heat exchanger between the ACM compressor and the ACM turbine, wherein the ACM first heat exchanger is downstream of the ACM compressor and upstream of the ACM turbine;
fluidly coupling an ACM second heat exchanger between the ACM turbine and the ACM compressor, wherein the ACM second heat exchanger is downstream of the ACM turbine and upstream of the ACM compressor;
fluidly coupling an ACM working fluid with the ACM compressor, the ACM first heat exchanger, the ACM turbine and the ACM second heat exchanger;
coupling an APU turbine in operative communication with the main shaft;
coupling an electrical power source in operative communication with the integrated motor/generator;
coupling the integrated motor/generator in operative communication with the main shaft; and
configuring the integrated motor/generator to at least one of produce mechanical rotary shaft energy into the main shaft, responsive to a predetermined gas turbine engine condition and generate electrical power responsive to another predetermined gas turbine engine condition.

11. The process of claim 10, further comprising:
coupling the integrated motor/generator in operative communication with a controller.

12. The process of claim 10 or 11, further comprising:
fluidly coupling a high pressure engine bleed to the APU turbine.

13. The process of any of claims 10 to 12, further comprising:
fluidly coupling an avionics heat exchanger to the ACM second heat exchanger.

14. The process of any of claims 10 to 13, further comprising:
configuring the predetermined gas turbine engine condition comprising an operating state demanding the high pressure engine bleed air.

15. The process of any of claims 10 to 14, further comprising:
configuring the predetermined gas turbine engine condition comprising an operating state demanding the electrical power; and/or
further comprising:
locating the ACM first heat exchanger in a fan duct.
